# FASCICULE DE BREVET EUROPEEN

(11) **EP 3 572 320 B1**
(45) Date de publication et mention de la délivrance du brevet: **06.07.2022**
(21) Numéro de dépôt: 19174124.8
(22) Date de dépôt: 13.05.2019
(51) Int. Cl.: B64C 13/06

(54) **PALONNIER À MODULE PRINCIPAL MONOBLOC ET MOBILE SUR UN CHÂSSIS DE SUPPORT COURBE**
SEITENSTEUERPEDAL MIT BEWEGLICHEM MONOBLOCK-HAUPTMODUL AUF EINEM GEKRÜMMTEN HALTERAHMEN
RUDDER BAR WITH SINGLE-PIECE MOBILE MAIN MODULE ON A CURVED SUPPORTING FRAME

(30) Priorité: 22.05.2018 FR 1854220
(43) Date de publication de la demande: 27.11.2019
(73) Titulaire: Airbus Operations SAS, 31060 Toulouse (FR)
(72) Inventeur: GUERING, Bernard, 31850 Montrabé (FR); SAINT-MARC, Laurent, 31530 Montaigut-sur-Save (FR)
(74) Mandataire: Gevers & Orès

(56) Documents cités:
- EP-A1- 3 124 378
- US-A- 3 129 605
- US-A- 3 359 821
- US-A- 4 484 722
- US-A1- 2014 131 523
- US-A1- 2014 251 066
- US-A1- 2017 166 296

## Description

### DOMAINE TECHNIQUE

La présente invention concerne un palonnier pour un aéronef, en particulier pour un avion de transport, ainsi qu'un aéronef comportant un tel palonnier.

Sur un aéronef, un palonnier est un dispositif mécanique qui permet au pilote et au copilote de commander la gouverne de direction et les freins des roues.

Le palonnier comprend des pédales et un ensemble de pièces mobiles qui, selon les types de mouvements qui sont appliqués aux pédales par le ou les pilotes, commandent la gouverne de direction ou les freins de l'aéronef.

### ÉTAT DE LA TECHNIQUE

Les palonniers utilisés sur les aéronefs sont, principalement sur les avions de ligne, des palonniers intégrés dans le plancher de la cabine de pilotage. Le palonnier est dit posé, car il repose sur le plancher de la cabine de pilotage.

La fixation du palonnier et la transmission des commandes du palonnier vers la gouverne de direction et/ou les freins s'effectuent sous le plancher de la cabine de pilotage. Cette architecture est la conséquence d'un choix de communiquer, dans le cas d'un palonnier connecté mécaniquement aux éléments à commander (notamment la gouverne de commande), par la zone sous plancher (liaisons par bielles, secteurs rotatifs et câbles), ce qui est plus facilement réalisable sur un aéronef.

Pour son fonctionnement, le palonnier doit comprendre un grand nombre de pièces (articulations, bielles, pivots,...). Un tel palonnier usuel, en raison notamment de ce nombre élevé de pièces, est complexe et n'est pas optimal notamment en termes d'encombrement, de masse et de coût.

Par ailleurs, on connaît :
- par le document EP 3 124 378, un palonnier réglable et rotatif pour aéronef, pourvu d'un module comportant une barre aux extrémités de laquelle sont fixées des pédales, ce module étant fixé sur le corps du palonnier ;
- par le document US 2014/131523, un palonnier comprenant un module comportant une structure ainsi que deux pédales, le palonnier comprenant également un châssis de support monté dans le plancher du cockpit de l'aéronef, une partie du module étant apte à être déplacée dans un structure montée sur le châssis de support ;
- par le document US 4 484 722, un système d'ajustement de pédale comprenant un module principal pourvu de deux pédales fixées de part et d'autre d'une barre ;
- par le document US 2014/251066, un palonnier comprenant un module principal comportant des pédales agencées de part et d'autre d'un module de montage ; et
- par le document US 3 129 605, un palonnier pour aéronef pourvu d'un module comprenant deux ensembles de pédale comprenant chacun une pédale, ainsi qu'un module de support.

Pour remédier au moins en partie aux inconvénients précités, on connaît également, par le brevet FR - 3 045 006 (ou la demande de brevet US 2017/166296 correspondante) de la demanderesse, un ensemble d'actionnement pour un palonnier qui comporte :
- au moins un châssis, pourvu de deux rails, chacun desdits rails présentant une forme de courbe concave ; et
- associé à chacun des rails un chariot mobile, chacun des chariots mobiles portant l'une des pédales, chacun desdits chariots mobiles étant configuré pour pouvoir être déplacé sur le rail associé, pour une commande de direction, sous une action exercée par au moins un pied d'un pilote sur l'une au moins desdites pédales.

Ainsi, grâce à ce châssis pourvu de rails courbes (ou curvilignes) sur lesquels peuvent se déplacer les chariots mobiles porteurs des pédales, on obtient une architecture plus simplifiée avec un nombre réduit de pièces.

Toutefois, il pourrait être envisagé de simplifier davantage encore le palonnier.

### EXPOSÉ DE L'INVENTION

La présente invention prévoit une nouvelle architecture de palonnier qui permet notamment de simplifier davantage le palonnier. Elle concerne un palonnier pour un aéronef, ledit palonnier comportant au moins un châssis de support destiné à être monté dans un plancher de l'aéronef, des pédales et un ensemble de fonctionnalités.

Dans le cadre de la présente invention, on entend par « ensemble de fonctionnalités » toutes les fonctions inhérentes à un palonnier.

Selon l'invention, ledit palonnier comporte au moins un châssis de support destiné à être monté dans un plancher de l'aéronef, des pédales et un ensemble de fonctionnalités, le palonnier comportant un module principal comprenant au moins lesdites pédales et ledit ensemble de fonctionnalités, ledit module principal étant monobloc et étant configuré pour pouvoir être déplacé et positionné sur le châssis de support, à l'aide d'une unique unité de déplacement, l'unité de déplacement comportant un ensemble unique de deux rails de guidage coopérant, chacun desdits rails de guidage présentant une forme d'un arc de cercle de diamètre supérieur à deux mètres, l'unité de déplacement comportant au moins quatre galets montés rotatifs sous le module principal et positionnés sensiblement à quatre coins du module principal et configurés pour pouvoir se déplacer, par paire, respectivement dans les deux rails de guidage, les galets étant agencés de sorte que leurs axes de rotation sont toujours orientés, quelle que soit leur position lors d'un déplacement, suivant le rayon dudit arc de cercle à la position correspondante.

Dans le cadre de la présente invention, on entend par « module monobloc » un module qui est d'un seul bloc ou unitaire (c'est-à-dire qui correspond à un seul objet).

Ainsi, grâce à l'invention, et notamment au module principal monobloc, qui comprend les pédales et les fonctionnalités associées, on obtient une architecture simplifiée avec un nombre réduit de pièces, comme précisé ci-dessous.

Cette architecture présente des avantages notamment en termes d'encombrement, de masse et de coût.

Dans un mode de réalisation préféré, le châssis de support est pourvue d'une face supérieure incurvée, représentant une forme courbe concave, sur laquelle le module principal est apte à être déplacé.

Par ailleurs, dans un mode de réalisation particulier, l'unité de déplacement comporte également un système de réglage apte à être commandé et configuré pour permettre de régler la position du module principal sur le châssis de support.

De façon avantageuse, le système de réglage comprend un motoréducteur apte à être commandé et une unité de commande configurée pour commander le motoréducteur. De préférence, le motoréducteur est monté sur le module principal et est apte, lorsqu'il est commandé, à déplacer, par l'intermédiaire d'un ensemble d'engrenages mécaniques, coopérant avec des éléments mécaniques fixés sur le châssis de support, ledit module principal sur ledit châssis de support.

Par ailleurs, dans un mode de réalisation particulier, le châssis de support est pourvu de repères visuels et le module principal est configuré pour pouvoir se déplacer au-dessus de ces repères visuels.

De façon avantageuse, le module principal comprend un miroir agencé sur une face arrière, ledit miroir étant positionné et orienté de manière à permettre la lecture, à partir d'une position d'un pilote, de repères visuels situés dans une zone autour de ladite face arrière du module principal.

En outre, dans un mode de réalisation particulier, le châssis de support comprend une structure pourvue d'alvéoles fermées.

La présente invention concerne également un aéronef, en particulier un avion de transport, qui est pourvu d'un palonnier tel que celui spécifié ci-dessus.

Dans un mode de réalisation préféré, pour un aéronef pourvu d'une cabine de pilotage munie d'un plancher, le plancher de la cabine de pilotage comporte une partie rehaussée destinée, à la fois, à recevoir ledit châssis de support du palonnier et à servir d'appui pieds pour un pilote.

### BRÈVE DESCRIPTION DES FIGURES

Les figures annexées feront bien comprendre comment l'invention peut être réalisée. Sur ces figures, des références identiques désignent des éléments semblables. Plus particulièrement :
- la figure 1 montre une vue latérale d'un avion au sol qui comporte un palonnier selon un mode de réalisation de l'invention ;
- la figure 2 est une vue en perspective d'un palonnier en regardant de l'arrière ;
- la figure 3 est une vue en perspective, en regardant de l'arrière, d'un palonnier dont un module principal est séparé d'un châssis de support ;
- les figures 4, 5 et 7 montrent le châssis de support selon différentes vues en perspective ;
- la figure 6 est une vue latérale schématique du châssis de support ;
- la figure 8 est une vue schématique d'un système de réglage ;
- les figures 9 et 10 sont des vues schématiques permettant de montrer un agencement de galets d'un système de guidage ;
- la figure 11 est une figure similaire à la figure 2 montrant des repères visuels agencés sur le châssis de support ; et
- la figure 12 est une vue schématique permettant de montrer le positionnement d'un miroir par rapport à des repères visuels.

### DESCRIPTION DÉTAILLÉE

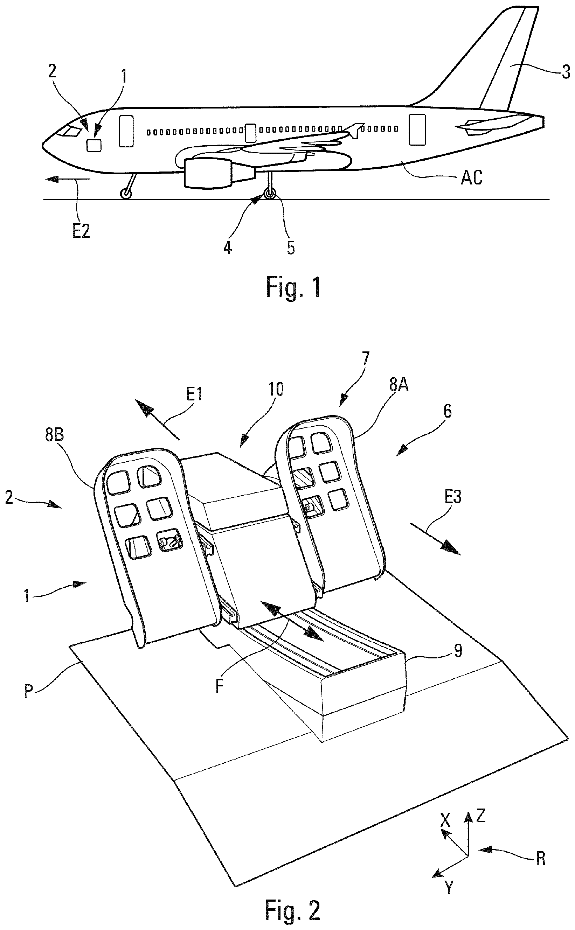

La figure 1 montre un aéronef AC, en l'occurrence un avion de transport, qui comprend une cabine de pilotage 2, dans laquelle est agencé un palonnier 1 selon l'invention (comme représenté très schématiquement sur cette figure 1). L'aéronef AC comporte également une gouverne de direction 3 et des freins 4 au niveau de roues 5 d'un train d'atterrissage principal de l'aéronef AC.

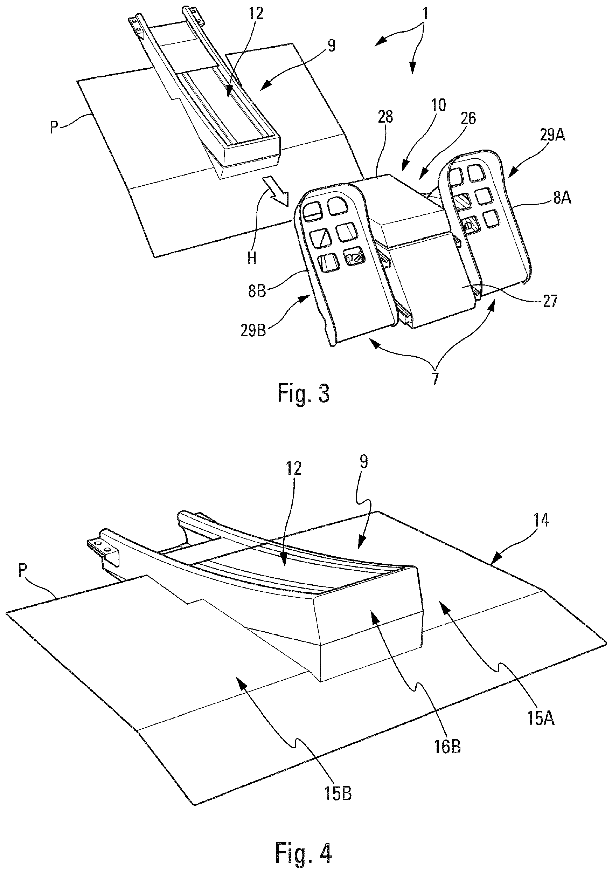

Les figures 2 et 3 montrent un palonnier 1 selon un mode de réalisation préféré de l'invention, qui est agencé dans la cabine de pilotage 2 de l'aéronef AC (représentée très partiellement), en étant intégré dans le plancher P de la cabine de pilotage 2.

Dans le cadre de la présente invention, les sens "arrière" et "avant" sont définis par rapport à la direction longitudinale de l'aéronef AC, à savoir pour "avant" comme illustré sur la figure 2 par une flèche E1 vers l'avant de l'aéronef AC (dans le sens d'une flèche E2 sur la figure 1) dans le sens de vol (ou de déplacement) de l'aéronef AC et pour "arrière" comme illustré sur la figure 2 par une flèche E3 vers l'arrière de l'aéronef AC.

Par ailleurs, dans le cadre de la présente description, les termes "inférieur", "supérieur", "bas" et "haut" sont définis suivant une direction verticale Z qui est orthogonale à un plan horizontal de l'aéronef défini par le plancher P (figure 2).

Par ailleurs, pour faciliter la description, on a représenté sur la figure 2 un repère R (XYZ) présentant :
- une direction longitudinale X selon l'axe longitudinal de l'aéronef ;
- la direction verticale Z, la direction verticale Z formant avec la direction horizontale X un plan XZ qui est parallèle à un plan vertical de symétrie de l'aéronef ; et
- une direction latérale Y orthogonale auxdites directions X et Z, la direction latérale Y formant avec la direction X un plan XY qui est parallèle au plancher P de la cabine de pilotage 2 (figure 2).

De façon usuelle, le palonnier 1 de l'aéronef AC est un organe de pilotage qui permet à un pilote de contrôler la gouverne de direction 3 (figure 1) de manière à agir sur l'axe de lacet de l'aéronef lors d'un vol, et également d'assurer le freinage de l'aéronef AC lorsque ce dernier est en mouvement au sol.

Le palonnier 1, qui est destiné à un avion de transport usuel, comporte un ensemble d'actionnement 6 représenté sur la figure 2, qui est susceptible d'être actionné par un pilote, par exemple le pilote principal ou un copilote de l'aéronef. Pour ce faire, le palonnier 1 comprend une paire 7 de pédales. Cette paire 7 comprend deux pédales 8A et 8B destinées à être actionnées par les deux pieds, respectivement droite et gauche, du pilote.

Pour un aéronef piloté par deux pilotes, le palonnier 1 comporte deux ensembles d'actionnement 6 tels que celui de la figure 2 par exemple, qui sont configurés, de façon usuelle, de sorte que les pédales destinées à l'un des pilotes, le copilote par exemple, sont toujours dans la même position que celles destinées à l'autre pilote, le pilote principal par exemple.

Le palonnier 1 comporte au moins un châssis de support 9 destiné à être monté dans le plancher P de l'aéronef.

Selon l'invention, ledit palonnier 1 comporte un module principal 10 comprenant au moins lesdites pédales 8A et 8B et un ensemble de fonctionnalités destinées au fonctionnement du palonnier 1. Le module principal 10 est monobloc et il est configuré pour pouvoir être déplacé (comme illustré par une double flèche F sur la figure 2) et pouvoir être positionné sur le châssis de support 9, à l'aide d'une unique unité de déplacement 11 précisée ci-dessous.

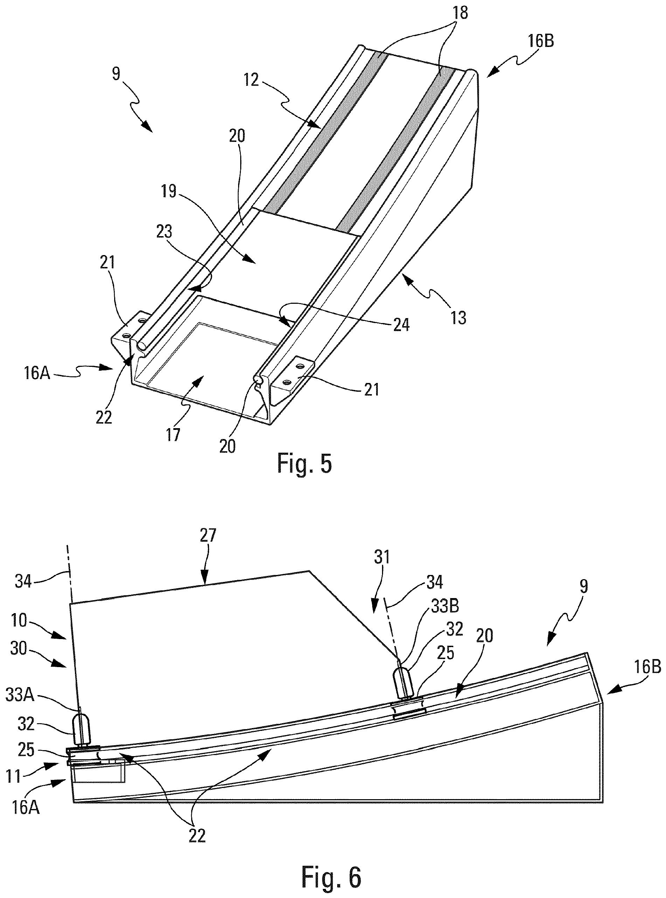

L'unité de déplacement 11 (figures 6 à 10) permet également, en plus du déplacement et du positionnement, de créer une liaison amovible entre le module principal 10 et le châssis de support 9. Cette liaison amovible permet de séparer le module principal 10 du châssis de support 9, comme représenté sur la figure 3, vers l'arrière dans le sens illustré par une flèche H.

Dans un mode de réalisation préféré, le châssis de support 9 est pourvu d'une face supérieure 12 incurvée (comme montré sur les figures 5 et 6), représentant une forme courbe concave, sur laquelle est déplacé le module principal 10. Le châssis de support 9 comprend également, de préférence, un fond 13 plat.

Dans un mode de réalisation préféré, le plancher P de la cabine de pilotage comporte une partie rehaussée 14. Cette partie rehaussée 14 montrée notamment sur la figure 4 est destinée à recevoir ledit châssis de support 9 du palonnier 1 et également à servir d'appui pieds, à droite et à gauche du châssis de support 9, respectivement pour les pieds de droite et de gauche d'un pilote (en regardant vers l'avant), comme montré par des flèches 15A et 15B.

Ainsi, grâce notamment à ce châssis de support 9 de type courbe (ou curviligne), sur lequel peut se déplacer le module principal 10 porteur des pédales 8A et 8B, on obtient une architecture de palonnier 1 simplifiée avec un nombre réduit de pièces. Cette architecture présente des avantages notamment en termes d'encombrement, de masse et de coût.

Le châssis de support 9 est donc globalement allongé et présente une forme générale de courbe concave.

Pour ce faire, le châssis de support 9 est fixé dans le plan XZ en présentant une direction générale selon X, tout en étant courbé (ou incurvé) de façon concave dans le plan XZ de sorte que l'extrémité arrière 16B du châssis de support 9 s'écarte du plancher P verticalement vers le haut selon la direction Z, comme montré sur les figures 4 et 5 notamment.

Cette courbure présente l'avantage de pouvoir positionner le plus ergonomiquement possible le module principal 10 pourvu des pédales 8A et 8B suivant la taille des pilotes. En effet, dans une cabine de pilotage 2, la position des pilotes est définie par rapport à l'encadrement des glaces (visibilité externe) et par rapport aux planches de bord (angles de visibilité interne). De ce fait, un grand pilote a une position d'assise de siège plus basse ainsi que des positions de pédales plus enfoncées et, d'un point de vue ergonomique, ces pédales demandent à être positionnées plus verticalement que pour un petit pilote, de façon à assurer un angle entre les jambes et les pieds qui soit naturel. A l'inverse, un petit pilote est positionné plus haut sur le siège et les pédales demandent à être positionnées plus horizontalement. Dans un palonnier mécanique articulé usuel, ces différentes positions sont généralement obtenues par une cinématique complexe de positionnement des pédales via un parallélogramme déformable recalant les pédales précisément suivant l'ergonomie (la taille principalement) des pilotes. Cette fonction habituellement complexe est réalisée très simplement dans le palonnier 1. En effet, la simple courbure concave du châssis de support 9 et ainsi du palonnier 1 permet de positionner ergonomiquement le module principal 10 porteur des pédales 8A et 8B de façon adaptée à l'utilisateur.

Comme représenté sur la figure 5, le châssis de support 9 comporte :
- à proximité d'une extrémité avant 16A, un dégagement 17 pour le déroulement d'un câblage avant (non représenté) ;
- des balayettes 18 anti-intrusion (destinées notamment à éviter une intrusion de poussière) ;
- une zone 19 couverte par la position extrême avant du module principal 10 ;
- des rails de guidage 20 latéraux, destinés au roulement de galets, comme précisé ci-dessous ;
- des éléments 21 avant de fixation du châssis de support 9 à la partie rehaussée 14 du plancher P ; et
- une interface arrière (non représentée) de fixation du châssis de support 9 à la partie de rehaussée 14 du plancher P.

Dans un mode de réalisation préféré, le châssis de support 9 est réalisé sous forme d'un ensemble monobloc. Il peut être fabriqué par un procédé d'impression 3D, par exemple en titane.

Il peut également être réalisé en aluminium par un procédé de moulage à la cire perdue. Dans ce cas, des rails de guidage (jonc standard en métal dur) précisés ci-dessous, sont rapportés au châssis de support (montage serré ou par collage).

On obtient ainsi un châssis de support 9 qui est rigide, léger, simple, et qui présente une masse et un coût réduits.

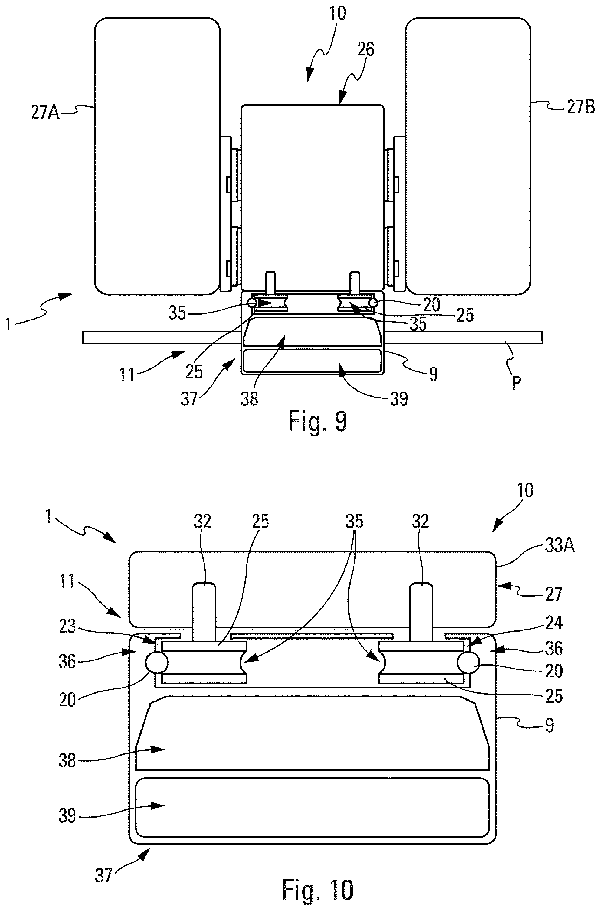

Comme représenté sur les figures 5 à 7, l'unité de déplacement 11 comporte, sur le châssis de support 9, un système de guidage 22 comprenant un ensemble (unique) à rails, formé des deux rails de guidage 20 opposés et coopérant. Ces deux rails de guidage 20 sont agencés vers la face supérieure 12 du châssis de support 9, sur des faces internes 23 et 24 opposées de parois latérales (agencées selon l'axe X) du châssis de support 9, comme représenté sur les figures 5 et 10.

Chacun desdits rails de guidage 20 présente une forme d'un arc de cercle de diamètre supérieur à deux mètres.

En outre, l'unité de déplacement 11 comporte des galets 25 qui sont montés rotatifs sous le module principal 10. Dans un mode de réalisation préféré, le module principal 10, comporte comme représenté notamment sur les figures 3 et 9, un module central 26 pourvu d'un module de base 27 inférieur et d'un module auxiliaire 28 supérieur (figure 3). Le module principal 10 comporte également deux modules à pédale 29A et 29B qui sont agencés de part et d'autre dudit module principal 10 dans la direction Y et qui portent chacun l'une des pédales 8A et 8B.

Les galets 25 sont montés sous le module de base 27 du module principal 10. Dans le mode de réalisation représenté, l'unité de déplacement 11 comporte quatre galets 25 positionnés sensiblement aux quatre coins de la paroi inférieure du module de base 27 et configurés pour pouvoir se déplacer, par paire, dans les deux rails de guidage 20 latéraux opposés.

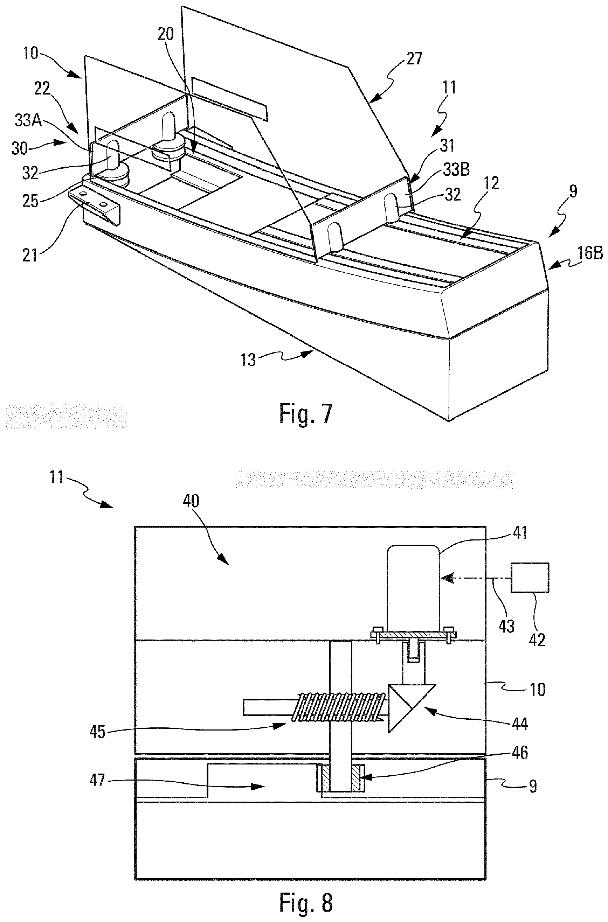

Comme représenté sur les figures 6 et 7, les galets de guidage 25 sont intégrés dans une face avant 30 et une face arrière 31 du module de base 27, à savoir deux galets 25 sur la face avant 30 et deux galets 25 sur la face arrière 31, de manière à pouvoir rouler dans les rails de guidage 20 fixés sur le châssis de support 9.

Les faces avant et arrière 30 et 31 (figure 6) du module de base 27 sont disposées radialement au cercle correspondant à la trajectoire décrite par le module principal 10 lors d'un réglage ergonomique pour une adaptation à la taille de pilotes, tel que précisé ci-après.

Les galets 25 sont fixés dans des plots 32 renforcés, qui sont solidaires de zones 33A et 33B basses, mécaniquement renforcées, des faces 30 et 31, comme montré sur les figures 6 et 7.

Ces zones 33A et 33B renforcées transfèrent les efforts en provenance des galets 25 directement dans les faces avant et arrière 30 et 31 du module principal 10 (avec un chemin d'effort direct).

Les galets 25 sont donc agencés à l'interface entre le châssis de support 9 et le module de base 27 du module principal 10. Cet agencement conduit principalement :
- à intégrer les galets 25 de sorte que leurs axes de rotation sont agencés radialement à la courbe du châssis de support 9 (et de guidage), comme précisé ci-dessous ;
- à créer une interface spécifique au niveau du châssis de support 9 pour prendre en compte les réactions des galets 25, comme précisé ci-dessous ; et
- à créer une géométrie de boîte du module de base 27 du module principal 10 mobile, dont la face avant 30 et la face arrière 31 supportant les galets 25 sont également radiales à la courbe du châssis de support 9.

Chacun des rails de guidage (et roulement) 20 est réalisé, par exemple, sous forme d'un jonc en métal dur (en acier, en titane,...) de forme courbe suivant un arc de cercle de grand diamètre, par exemple de l'ordre de 2,4 mètres. De plus, chaque rail de guidage 20 est, par exemple, bridé sur le châssis de support 9 de préférence en alliage léger.

Par ailleurs, les galets 25 sont agencés de sorte que leurs axes de rotation 34 (figure 6) soient toujours orientés, quelle que soit leur position lors d'un déplacement le long des rails de guidage 20, suivant le rayon du cercle correspondant à la trajectoire décrite et plus précisément le cercle correspondant à la courbure des rails de guidage 20.

Le contact entre un galet 25 et un rail de guidage 20 est un contact suivant la génératrice de la section circulaire ou un contact ponctuel s'il existe un jeu réduit. Chaque galet 25 est pourvu d'une gorge 35 adaptée au rail de guidage 20 coopérant, comme représenté sur la figure 10. La courbure du cercle de guidage étant très grande, il n'existe pas de risque d'interférence, lors du roulement du galet 25 sur le rail de guidage 20, entre le rail de guidage 20 et des éléments du galet 25.

Lors d'une action du pilote sur l'une des pédales 8A et 8B, l'appui sur la pédale est réalisé au niveau du talon, c'est-à-dire à une position basse, donc relativement près des galets 25 (selon la direction Z). Dans ce cas :
- dans le plan XZ, les réactions sur les galets 25 pour contrer le moment induit sont réduits, en raison du grand bras de levier de réaction ;
- il en est de même dans le plan XY ; et
- dans le plan YZ, les projections dans ce plan de l'effort initial de la pédale sont très faibles et n'ont que peu d'effet sur le bilan des charges.

Dans un mode de réalisation préféré, représenté sur la figure 10, la section transversale 37 du châssis de support 9 est renforcée (parallèlement au plan YZ) au droit des interfaces entre les rails de guidage 20 et les galets, comme illustré par une flèche 36 :
- pour assurer un bridage robuste entre les rails de guidage 20 et le châssis de support 9 ; et
- pour reprendre les moments latéraux induits des efforts de réaction entre les rails de guidage 20 et les galets 25.

Dans un mode de réalisation particulier, le châssis de support 9 comprend une structure pourvue d'au moins une alvéole fermée.

La section transversale 37 du châssis de support 9 est ainsi constituée, de préférence, de deux alvéoles fermées 38 et 39 superposées selon la direction Z, dans le but de la rigidifier, tout en optimisant sa masse.

Le guidage, par galets 25 radiaux et rails de guidage 20 courbes, tel que décrit ci-dessus, présente de nombreux d'avantages. En particulier :
- le système de guidage 22 à rails de guidage 20 et galets 25 permet d'assurer un guidage précis et robuste avec peu de pièces concernées, et il est simple ; et
- l'intégration du système de guidage 22 en partie inférieure (cachée) du module principal 10, assure :
   - une compacité, en restant dans l'enveloppe initiale du module principal 10 mobile et du châssis de support 9 ;
   - une rigidité, en raison du design particulier de la section transversale 37 du châssis de support 9 (renforts 36 spécifiques, alvéoles fermées 38 et 39) et le transfert des efforts le plus directement possible dans les éléments aptes à y résister ;
   - un ensemble harmonieux, car le système de guidage 22 n'est pas visible ; et
   - une protection contre des agents extérieurs (poussière,...) en raison du jeu réduit existant à l'interface entre le module principal 10 et le châssis de support 9. Ce jeu peut, de plus, être sécurisé par un joint spécifique, et notamment par les balayettes 18 (figure 5).

Par ailleurs, dans la zone d'interface entre les galets 25 et le module de base 27 comme représenté sur la figure 7, les galets 25 introduisent des réactions et des moments dans ces zones d'interface au niveau des plots 32 des zones renforcées 33A et 33B périphériques aux galets. Ces charges sont idéalement introduites dans le plan des faces avant et arrière 30 et 31 du module principal 10 pour notamment obtenir un chemin d'effort le plus direct possible.

Par ailleurs, dans un mode de réalisation particulier, l'unité de déplacement 11 comporte un système de réglage 40 apte à être commandé et configuré pour permettre de régler la position du module principal 10 sur le châssis de support 9.

Le système de réglage 40 comprend, comme représenté très schématiquement sur la figure 8, un motoréducteur 41 apte à être commandé et une unité de commande 42 configurée pour permettre à un opérateur, notamment un pilote, de commander le motoréducteur 41, comme illustré très schématiquement par une liaison 43 en trait mixte.

Le motoréducteur 41 est monté sur le module principal 10 et il est apte, lorsqu'il est commandé via l'unité de commande 42, à déplacer, par l'intermédiaire d'un ensemble d'engrenages mécaniques, coopérant avec des éléments mécaniques fixés sur le châssis de support 9, ledit module principal 10 sur ledit châssis de support 9.

Plus précisément, comme représenté sur la figure 8, le système de réglage 40 comporte :
- un renvoi d'angle 44 qui est actionné par le motoréducteur 41 lors de la rotation générée par ce dernier ;
- une vis sans fin 45 liée au renvoi d'angle 44 ;
- une roue 46 entrainée par la vis sans fin 45 ; et
- une crémaillère courbe 47 sur laquelle agit la roue 46.

La crémaillère courbe 47 est un secteur denté, de très grand rayon, prévu sur le châssis de support 9.

Le réglage en position, mis en œuvre par le système de réglage 40, est donc réalisé, via une commande électrique activant le motoréducteur 41, par une chaîne cinématique faisant intervenir dans l'ordre après la commande, le renvoi d'angle 44, la vis sans fin 45, la roue 46 et la crémaillère courbe 47.

Ce système de réglage 40 est configuré pour permettre à un opérateur, notamment un pilote de l'aéronef, de modifier la position du module principal 10 (et ainsi des pédales 8A et 8B) sur le châssis de support 9, comme illustré par la flèche F sur la figure 2, avec un déplacement mis en œuvre via le système de guidage 22.

Le système de réglage 40 permet ainsi d'approcher ou d'écarter le module principal 10 (et ainsi les pédales 8A et 8B) du siège du pilote afin d'adapter leur position à la taille du pilote qui devra l'utiliser.

Contrairement à une cinématique usuelle articulée utilisant des pivots, des rotules, et des roulements notamment, la cinématique de guidage linéaire du module principal 10, mobile sur le châssis de support 9 fixe, mise en œuvre par l'unité de déplacement 11, pour ajuster la position des pédales à l'utilisateur lors de sa prise de mission (ajustement ergonomique par rapport à la taille principalement) utilise des galets 25 et des rails de guidage 20. Cette technologie est une technologie éprouvée conduisant à des solutions simples et robustes.

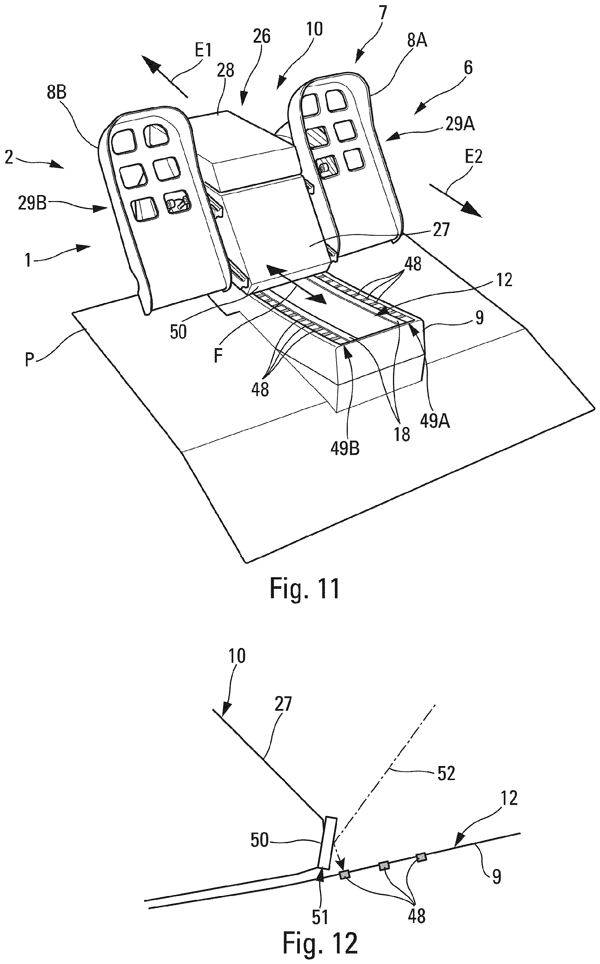

Par ailleurs, dans un mode de réalisation particulier, le châssis de support 9 est pourvu d'une pluralité de repères visuels 48, agencés les uns à côté des autres le long de la face supérieure 12 du châssis de support 9. De préférence, les repères visuels 48 sont agencés selon deux rangées 49A et 49B à côté des balayettes 18, comme représenté sur la figure 11. Le module principal 10 peut se déplacer au-dessus de ces repères visuels 48.

Ces repères visuels 48 permettent de repérer la position d'une face arrière 51 (figure 12) du module de base 27 et donc du module principal 10, le long du châssis de support 9, ce qui permet de réaliser un réglage personnel pour chaque pilote.

Dans un mode de réalisation particulier, représenté sur les figures 11 et 12, le module principal 10 comprend un miroir 50 agencé sur la face arrière 51 (inclinée vers le bas) du module de base 27. Le miroir 50 est positionné et orienté de manière à permettre la lecture, à partir d'une position d'un pilote, des repères visuels 48 situés dans une zone autour de ladite face arrière 51 du module de base 27.

La ligne de vision du pilote étant trop rasante pour permettre d'avoir une indication directe précise de la position, le miroir 50 qui est disposé en extrémité inférieure du module de base 27 mobile et qui est orienté de façon à ce que la lecture du pilote soit orthogonale à l'indication comme illustré par une flèche 52, permet d'avoir une lecture précise des repères visuels 48. Les repères visuels 48 peuvent être simplement marqués (par une peinture visible, par exemple phosphorescente) ou être lumineux. Le miroir 50 peut également profiter d'une source lumineuse passive ou active, issue de l'environnement de la cabine de pilotage.

Le palonnier 1, tel que décrit ci-dessus, présente notamment les caractéristiques suivantes :
- un module de base 10 mobile se déplaçant sur un châssis de support 9 fixe servant de guide, par l'intermédiaire du système de guidage 22 ;
- une fois à la position choisie par le pilote via le système de réglage 40, le module de base 10 ne se déplace plus sur le châssis de support 9, qui a principalement une fonction structurale de support et de guide ;
- le châssis de support (et de guidage) 9 se fond visuellement dans l'environnement structural et l'aménagement de la cabine de pilotage 2 ; et
- le châssis de support 9 ne nécessite pas d'être déposé en cas de maintenabilité, suite à une panne d'une quelconque fonction active du palonnier 1, présente dans le module principal 10.

Par conséquent :
- l'ensemble des dispositifs cinématiques mobiles et des systèmes sont presqu'exclusivement regroupés dans et sur le module principal 10 ; et
- le châssis de support (et de guidage) 9, une fois le réglage ergonomique réalisé, n'a plus qu'un rôle principalement structural (support fixe de maintien pour le module principal 10).

L'architecture du palonnier 1, telle que décrite ci-dessus, présente de nombreux avantages. En particulier :
- elle présente une réalisation simplifiée et elle utilise un nombre réduit de pièces. On obtient ainsi un gain en masse et une simplification importante ;
- elle présente également une intégration facilitée du palonnier 1 et des éléments associés ;
- elle présente un encombrement réduit, ainsi qu'un coût réduit ; et
- elle présente une utilisation simplifiée avec un réglage électrique (de positionnement du module principal 10 sur le châssis de support 9).

## Revendications

1. Palonnier pour un aéronef, ledit palonnier (1) comportant au moins un châssis de support (9) destiné à être monté dans un plancher (P) de l'aéronef (AC), des pédales (8A, 8B) et un ensemble de fonctionnalités, le palonnier comportant un module principal (10) comprenant au moins lesdites pédales (8A, 8B) et ledit ensemble de fonctionnalités, ledit module principal (10) étant monobloc et étant configuré pour pouvoir être déplacé et positionné sur le châssis de support (9), à l'aide d'une unique unité de déplacement (11), l'unité de déplacement (11) comportant un ensemble unique de deux rails de guidage (20) coopérant, chacun desdits rails de guidage (20) présentant une forme d'un arc de cercle de diamètre supérieur à deux mètres, l'unité de déplacement (11) comportant au moins quatre galets (25) montés rotatifs sous le module principal (10) et positionnés sensiblement à quatre coins du module principal (10) et configurés pour pouvoir se déplacer, par paire, respectivement dans les deux rails de guidage (20), les galets (25) étant agencés de sorte que leurs axes de rotation (34) sont toujours orientés, quelle que soit leur position lors d'un déplacement, suivant le rayon dudit arc de cercle à la position correspondante.

2. Palonnier selon la revendication 1,
**caractérisé en ce que** le châssis de support (9) est pourvue d'une face supérieure (12) incurvée, représentant une forme courbe concave, sur laquelle le module principal (10) est apte à être déplacé.

3. Palonnier selon l'une quelconque des revendications précédentes, **caractérisé en ce que** l'unité de déplacement (11) comporte un système de réglage (40) apte à être commandé et configuré pour permettre de régler la position du module principal (10) sur le châssis de support (9).

4. Palonnier selon la revendication 3,
**caractérisé en ce que** le système de réglage (40) comprend un motoréducteur (41) apte à être commandé et une unité de commande (42) configurée pour commander le motoréducteur (41).

5. Palonnier selon la revendication 4,
**caractérisé en ce que** le motoréducteur (41) est monté sur le module principal (10) et est apte, lorsqu'il est commandé, à déplacer, par l'intermédiaire d'un ensemble d'engrenages mécaniques, coopérant avec des éléments mécaniques fixés sur le châssis de support (9), ledit module principal (10) sur ledit châssis de support (9).

6. Palonnier selon l'une quelconque des revendications précédentes, **caractérisé en ce que** le châssis de support (9) est pourvu de repères visuels (48) et **en ce que** le module principal (10) est configuré pour pouvoir se déplacer au-dessus de ces repères visuels (48).

7. Palonnier selon la revendication 6,
**caractérisé en ce que** le module principal (10) comprend un miroir (50) agencé sur une face arrière (51), ledit miroir (50) étant positionné et orienté de manière à permettre la lecture, à partir d'une position d'un pilote, de repères visuels situés dans une zone autour de ladite face arrière (51) du module principal (10).

8. Palonnier selon l'une quelconque des revendications précédentes, **caractérisé en ce que** le châssis de support (9) comprend une structure (37) pourvue d'alvéoles fermées (38, 39).

9. Aéronef,
**caractérisé en ce qu'**il comporte un palonnier (1) tel que celui spécifié sous l'une quelconque des revendications 1 à 8.

10. Aéronef selon la revendication 9, pourvu d'une cabine de pilotage (2) munie d'un plancher (P),
**caractérisé en ce que** le plancher (P) de la cabine de pilotage (2) comporte une partie rehaussée (14) destinée, à la fois, à recevoir ledit châssis de support (9) du palonnier (1) et à servir d'appui pieds pour un pilote.

## Patentansprüche

1. Seitensteuerpedal für ein Flugzeug, wobei das Seitensteuerpedal (1) mindestens ein Stützgehäuse (9), das dazu vorgesehen ist, in einem Boden (P) des Flugzeugs (AC) montiert zu werden, Pedale (8A, 8B) und eine Anordnung von Funktionalitäten umfasst,
wobei das Seitensteuerpedal ein Hauptmodul (10) umfasst, das mindestens die Pedale (8A, 8B) und die Anordnung von Funktionalitäten umfasst, wobei das Hauptmodul (10) einstückig ist und ausgelegt ist, um mithilfe einer einzigen Verschiebeeinheit (11) auf dem Stützrahmen (9) verschoben und positioniert werden zu können, wobei die Verschiebeeinheit (11) eine einzige zusammenwirkende Anordnung mit zwei Führungsschienen (20) umfasst, wobei jede der Führungsschienen (20) eine Form eines Kreisbogens mit einem Durchmesser größer als zwei Metern umfasst, wobei die Verschiebeeinheit (11) mindestens vier Rollen (25) umfasst, die rotierbar unter dem Hauptmodul (10) positioniert sind und im Wesentlichen an vier Ecken des Hauptmoduls (10) positioniert sind und ausgelegt sind, um sich jeweils in den zwei Führungsschienen (20) paarweise zu verschieben, wobei die Rollen (25) so eingerichtet sind, dass ihre Rotationsachsen (34) immer unabhängig von deren Position während einer Verschiebung gemäß dem Radius des Kreisbogens zur entsprechenden Position ausgerichtet sind.

2. Seitensteuerpedal nach Anspruch 1,
**dadurch gekennzeichnet, dass** der Stützrahmen (9) mit einer gekrümmten Oberseite (12) versehen ist, die eine konkave gekrümmte Form darstellt, auf der das Hauptmodul (10) verschoben werden kann.

3. Seitensteuerpedal nach einem der vorstehenden Ansprüche,
**dadurch gekennzeichnet, dass** die Verschiebeeinheit (11) ein Regulierungssystem (40) umfasst, das gesteuert werden kann und ausgelegt ist, um zu erlauben, die Position des Hauptmoduls (10) auf dem Stützgehäuse (9) zu regulieren.

4. Seitensteuerpedal nach Anspruch 3,
**dadurch gekennzeichnet, dass** das Regulierungssystem (40) einen steuerbaren Getriebemotor (41) und eine Steuereinheit (42) umfasst, die ausgelegt ist, um den Getriebemotor (41) zu steuern.

5. Seitensteuerpedal nach Anspruch 4,
**dadurch gekennzeichnet, dass** der Getriebemotor (41) auf dem Hauptmodul (10) montiert ist und, wenn er betrieben wird, über eine Anordnung von mechanischen Zahnrädern, die mit auf dem Stützgehäuse (9) fixierten mechanischen Elementen zusammenwirken, das Hauptmodul (10) auf dem Stützgehäuse (9) verschieben kann.

6. Seitensteuerpedal nach einem der vorstehenden Ansprüche,
**dadurch gekennzeichnet, dass** das Stützgehäuse (9) mit visuellen Markierungen (48) versehen ist und dadurch, dass das Hauptmodul (10) ausgelegt ist, um sich oberhalb dieser visuellen Markierungen (48) verschieben zu können.

7. Seitensteuerpedal nach Anspruch 6,
**dadurch gekennzeichnet, dass** das Hauptmodul (10) einen Spiegel (50) umfasst, der auf einer Rückseite (51) eingerichtet ist, wobei der Spiegel (50) derart positioniert und ausgerichtet ist, dass er das Lesen von visuellen Markierungen, die sich in einem Bereich um die Rückseite (51) des Hauptmoduls (10) herum befinden, ausgehend von einer Position eines Piloten erlaubt.

8. Seitensteuerpedal nach einem der vorstehenden Ansprüche,
**dadurch gekennzeichnet, dass** das Stützgehäuse (9) eine mit geschlossenen Rahmen (38, 39) versehene Struktur (37) umfasst.

9. Flugzeug,
**dadurch gekennzeichnet, dass** es ein Seitensteuerpedal (1), wie jenem, das in einem der Ansprüche 1 bis 8 spezifiziert ist, umfasst.

10. Flugzeug nach Anspruch 9, das mit einer Pilotenkanzel (2) versehen ist, die mit einem Boden (P) ausgestattet ist,
**dadurch gekennzeichnet, dass** der Boden (P) der Flugkanzel (2) einen angehobenen Teil (14) umfasst, der dazu vorgesehen ist, gleichzeitig das Stützgehäuse (9) des Seitensteuerpedals (1) aufzunehmen und als Fußauflage für einen Piloten zu dienen.

## Claims

1. A rudder control unit for an aircraft, said rudder control unit (1) including at least one support frame (9) intended to be mounted in a floor (P) of the aircraft (AC), pedals (8A, 8B) and a set of functionalities, the rudder control unit including a main module (10) comprising at least said pedals (8A, 8B) and said set of functionalities, said main module (10) consisting of a single piece and being configured such that it can be moved and positioned on the support frame (9), using a unique movement unit (11), the movement unit (11) including a unique assembly of two cooperating guide rails (20), each of said guide rails (20) being shaped as a circular arc with a diameter greater than two meters, the movement unit (11) including at least four rollers (25) rotatably mounted under the main module (10) and positioned substantially at four corners of the main module (10) and configured to be able to move, in pairs, in the two guide rails (20), respectively, the rollers (25) being arranged such that the axes of rotation (34) thereof are always oriented, regardless of the position thereof during a movement, along the radius of said circular arc at the corresponding position.

2. The rudder control unit as claimed in claim 1,
**characterized in that** the support frame (9) is provided with an inwardly curved upper face (12), making a concave curved shape, on which the main module (10) can be moved.

3. The rudder blade as claimed in any one of the preceding claims, **characterized in that** the movement unit (11) includes an adjusting system (40) that can be commanded and configured to allow the adjustment of the position of the main module (10) on the support frame (9).

4. The rudder control unit as claimed in claim 3,
**characterized in that** the adjusting system (40) comprises a geared motor (41) that can be commanded and a command unit (42) configured to command the geared motor (41).

5. The rudder control unit as claimed in claim 4,
**characterized in that** the geared motor (41) is mounted on the main module (10) and can, when it is commanded, move, by means of an assembly of mechanical gears, cooperating with mechanical elements fixed on the support frame (9), said main module (10) on said support frame (9).

6. The rudder control unit as claimed in any one of the preceding claims, **characterized in that** the support frame (9) is provided with visual marks (48) and **in that** the main module (10) is configured to be able to move above these visual marks (48).

7. The rudder control unit as claimed in claim 6,
**characterized in that** the main module (10) comprises a mirror (50) arranged on a rear face (51), said mirror (50) being positioned and oriented such as to allow reading, from a pilot position, of visual marks located in an area around said rear face (51) of the main module (10).

8. The rudder control unit as claimed in any one of the preceding claims, **characterized in that** the support frame (9) comprises a structure (37) provided with closed cells (38, 39).

9. An aircraft,
**characterized in that** it includes a rudder control unit (1) such as that described in any one of claims 1 to 8.

10. The aircraft as claimed in claim 9, provided with a cockpit (2) supplied with a floor (P),
**characterized in that** the floor (P) of the cockpit (2) includes a raised part (14) intended both to receive said support frame (9) of the rudder control unit (1) and to serve as a footrest for a pilot.
